# EUROPEAN PATENT SPECIFICATION

(11) **EP 0 441 461 B1**
(45) Date of publication and mention of the grant of the patent: **01.09.1993**
(21) Application number: 91200937.0
(22) Date of filing: 26.10.1988
(51) Int. Cl.: F02M 35/16, B60K 13/02

(54) **Air intake system adapted for motor bicycle engine**
Für einen Motorradmotor angepasstes Lufteinlasssystem
Système d'aspiration d'air adapté à un moteur de motocyclette

(30) Priority: 27.10.1987 JP 270579/87; 28.10.1987 JP 272809/87; 03.12.1987 JP 304567/87; 12.02.1988 JP 28973/88
(43) Date of publication of application: 14.08.1991
(62) Divisional of application: 88310041.4
(73) Proprietor: SUZUKI KABUSHIKI KAISHA, Shizuoka-Ken (JP)
(72) Inventor: Inaba, Ryuichi, Hamamatsu-Shi, Shizuoka-Ken (JP); Nagayoshi, Michio, Hamamatsu-Shi, Shizuoka-Ken (JP); Urabe, Atsuo, Hamamatsu-Shi, Shizuoka-Ken (JP); Nitta, Yutaka, Hamamatsu-shi Shizuoka-Ken (JP)
(74) Representative: Dealtry, Brian

(56) References cited:
- EP-A- 0 065 183
- DE-A- 3 701 736
- FR-A- 2 575 990
- US-A- 1 855 038
- US-A- 4 208 197
- US-A- 4 354 570
- US-A- 4 681 178
- US-A- 4 703 825
- PATENT ABSTRACTS OF JAPAN, vol. 10, no. 315 (M-529)[2371], 25th October 1986; & JP-A-61 125 921 (YAMAHA) 13-06-1986

## Description

BACKGROUND OF THE INVENTION

This invention relates to a motor-bicycle and more particularly to an air intake system and members associated therewith for an engine of the motor-bicycle adapted to supply air to the engine.

A motor-bicycle is equipped with an engine within a frame member which generally has an inversed trapezoidal shape and to which is operatively connected an air cleaner for removing foreign materials such as dirt or dust in the air. The thus cleaned air is guided in a carburetor through an intake tube, and the air introduced into the carburetor is then mixed therein with a fuel, the mixture being supplied to the engine for combustion.

Moreover, the air cleaner of the motor bicycle is usually arranged above and behind the engine and below the fuel tank or seat and the inlet portion of the air cleaner is positioned so as to be sealed as possible for the purpose of preventing invasion of rain or muddy water. This arrangement however inhibits the introduction of fresh air therein, causing for the air retained there to be heated by hot air generated by the engine. The thus heated air is introduced into the air cleaner, causing for the setting of a carburetor to be disordered.

Particularly, recent motor bicycles are provided with cowlings and the motor bicycle of this type tends to be easily suffered from the above described phenomenon. In order to obviate such adverse phenomenon, in the conventional technique, an air intake port is provided for the front surface of the cowling and the port is connected through a rubber made tube with a pipe located below the fuel tank. The pipe is connected to the inlet of the air cleaner to introduce cold fresh air into the air cleaner. According to this arrangement, however, since the pipe must be welded to the fuel tank, the productivity thereof is lowered and moreover, the inner space is also reduced, resulting in instability of the duct or pipe arrangement in the rear portion of the motor bicycle.

Also, it is known from JP-A-61 125921 to provide a motor bicycle having a cowling which covers the front side of the body of the motor bicycle. The cowling is provided with an air inlet port for taking in wind generated due to running of the bicycle. A duct is secured to an inside surface of the cowling behind the air inlet port.

An object of this invention is to provide an air guide unit of an air intake system of an engine for a motor bicycle of the type provided with a cowling capable of easily and smoothly taking a fresh cold air for carburetors of the engine, thereby improving air suction efficiency and engine output performance.

According to the present invention there is provided an air intake system of an engine of a motor bicycle of the type provided with a cowling which covers a front side of a motor bicycle body, the cowling being provided with an air inlet port for taking wind generated due to running of the motor bicycle and a first duct secured to an inside surface of said cowling behind said air inlet port, characterised in that an air cleaner is located to the rear side of the engine, a second duct is secured to a frame member, said second duct having an upstream end communicated with the downstream end of said first duct and a downstream end opened towards an inlet of the air cleaner, said first duct being made of a rubber.

In another aspect of this invention there is provided an air intake system adapted for an engine of a motor bicycle of the type provided with a cowling which covers a front side of a motor bicycle body characterized in that the cowling is provided with an air inlet port for taking wind generated due to running of the motor bicycle, a first duct secured to an inside surface of the cowling behind the air inlet port, and a second duct is secured to and along a frame member, the second duct having an upstream end communicated with the downstream end of the first duct and a downstream end opened towards an inlet of an air cleaner. The first duct is made of a rubber and the second duct is made of a synthetic resin.

In further aspect, the fresh air taken through the side surface of the cowling is introduced upward, and is made blow upward to the air cleaner inlet portion so that cold outer air is supplied to the carburetor. Therefore, the air fuel ratio can be stabilized and the engine output can be improved.

The duct through which air is introduced is divided into two pieces, the front one and the rear one, the front one being the cowling-side duct, while the rear one is the synthetic resin duct on the frame side. As a result, connection at the time of mounting the duct can be easily conducted. The synthetic resin duct exhibits sufficient rigidity so that it can be stably mounted on the frame, and it can be previously assembled. Consequently, the entire productionality is made excellent.

The preferred embodiments according to this invention will be described further in detail hereunder with reference to the accompanying drawings.

### BRIEF DESCRIPTION OF THE DRAWINGS

In the accompanying drawings:
Fig. 1 is a side-elevational view illustrating a motor bicycle equipped with an air intake device for motor bicycle according to this invention;
Fig. 2 is a lateral cross-sectional view taken along line VII-VII of Fig. 1;
Fig. 3 is a vertical cross-sectional view taken along line VIII-VIII of Fig. 1;
Fig. 4 is an exploded perspective view illustrating disposition of essential portions of an air intake device for motor bicycle.

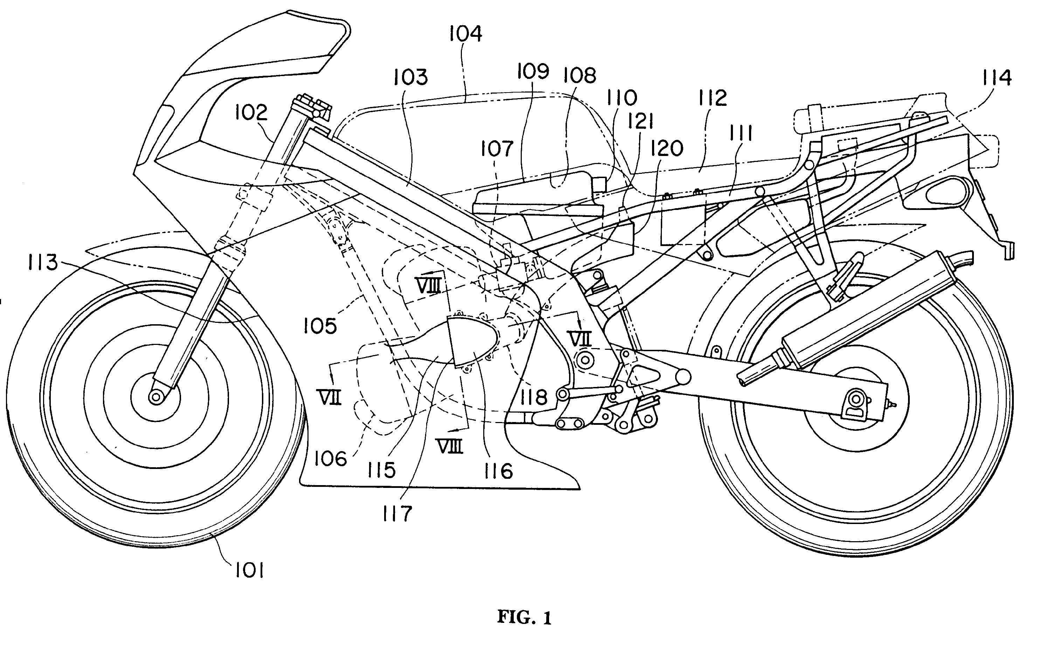

A motor bicycle of the recent type is often provided with a cowling such as shown in Fig. 1 for covering the front portion of the motor bicycle body.

Referring to Fig. 1, a main frame 103 extends rearwards from a head pipe 102 which supports a front wheel 101 in such a manner that the front wheel 101 can be steered, a fuel tank 104 being mounted on the main frame 103. An engine 106 is mounted on within a space surrounded by a down tube 105 hung downwards from the head pipe 102 and the above-described main frame 103. An air cleaner 109 accommodated in a concave chamber 108 formed in the rear bottom portion of the above-described fuel tank 104 is connected to the upper stream of a carburetor 107 for supplying fuel to the engine 106. An inlet 110 of the air cleaner 109 opens rearwards.

From the rear upper portion of the main frame 103, a seat rail 111 extends rearwards and a seat 112 is mounted thereon. A cowling 113 covers the front portion of the bicycle body from the lower end portion of the main frame 103 to the portion in front of the engine 106 and the two side surfaces of the engine 106. A body cover 114 covers the two side surfaces below the seat 112.

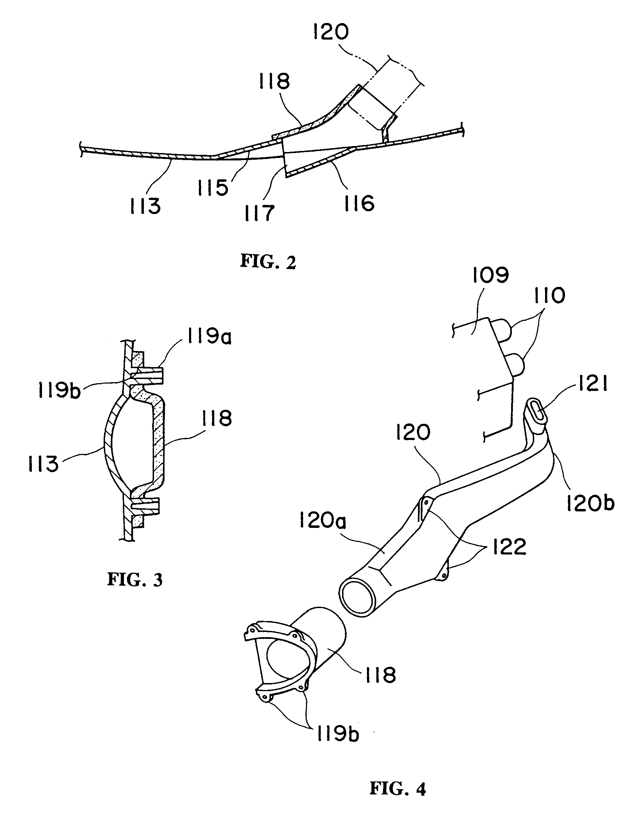

On one side surface of the cowling 113, an air inlet port 117 is formed which opens in such a manner that a front half portion 115 is, as shown in Fig. 2, in the form of an inside concave, while the rear half portion 116 expands outwards for the purpose of easily taking wind generated due to running of the motor bicycle.

Behind the air inlet port 117, a cowling-side duct 118 made of rubber is connected, this cowling-side duct 118 being secured to the inside surface of the cowling 113. A method for mounting the same is described as shown in Fig. 3 in which a projection 119a is disposed around the air inlet portion 117 disposed in the inside surface of the cowling 113, and a fitting hole 119b bored in the duct 118 to be inserted by the former is used to connected them by virtue of the elasticity of the rubber.

On the other hand, to the side surface on the inside of the main frame 103, a frame-side duct 120 made of a synthetic resin is screwed by means of a fitting member 122 for the purpose of securing them.

The duct 120 is formed in such a manner that its upper stream end 120a extends adjacent to the above-described air inlet port 117, while the lower stream end 120b thereof extends to the portion below the inlet 110 of the above-described air cleaner 109. An upper stream end 120a of it is connected by being inserted into the duct 118, and its lower stream end 120b has an air discharge port 121 opening upwardly.

As a result of the above-described structure, air introduced into the air inlet port 117 by virtue of running of the motor bicycle passes through the ducts 118 and 120, and is discharged from the air discharge port 121. The thus-discharged air is taken into the air cleaner 109 through the inlet 110. During running of the motor bicycle, fresh and cold air is always supplied to the carburetor 107 so that fuel control is stabilized and the engine output performance is improved.

The ducts 118 and 120 divided into two pieces are respectively mounted to the cowling side and the frame side so that they can be readily connected to each other at the time of mounting the cowling 113. The duct 118 is made of rubber and can be mounted by virtue of its elasticity in a single action. The other duct 120 is made of a synthetic resin so that it exhibits an excellent productionality and rigidity. Therefore, the position of the air discharge port can be stably maintained by mounting the duct 120 on the main body. Furthermore, it is very easy to be assembled, and it exhibits liberty of design so that space can be efficiently utilized.

## Claims

1. An air intake system of an engine of a motor bicycle of the type provided with a cowling which covers a front side of a motor bicycle body, the cowling (113) being provided with an air inlet port (117) for taking wind generated due to running of the motor bicycle and a first duct (118) secured to an inside surface of said cowling (113) behind said air inlet port (117), characterised in that an air cleaner (109) is located to the rear side of the engine, a second duct (120) is secured to a frame member (103) said second duct (120) having an upstream end (120a) communicated with the downstream end of said first duct (118) and a downstream end (120b) opened towards an inlet (110) of the air cleaner (109), said first duct (118) being made of a rubber.

2. The air intake system according to claim 1, wherein said second duct (120) is made of a synthetic resin.

3. The air intake system according to claim 1, wherein said air inlet port (117) is provided with a front half portion (115) in a form of an inside concave and a rear half portion (116) expanding outwardly.

## Patentansprüche

1. Luftansaugsystem einer Brennkraftmaschine eines Kraftrads der Art mit einer Verkleidung, die eine Vorderseite eines Kraftradaufbaus verdeckt, wobei die Verkleidung (113)mit einer Lufteinlaßöffnung (117) zum Aufnehmen des bei Fahrt des Kraftrads entstehenden Fahrtwinds und einer an einer Innenseitenfläche der Verkleidung (113) hinter der Lufteinlaßöffnung (117) befestigten ersten Leitung (118) versehen ist, dadurch gekennzeichnet, daß ein Luftfilter (109) an der Rückseite der Brennkraftmaschine angeordnet ist, an einem Rahmenelement (103) eine zweite Leitung (120) befestigt ist, die ein mit dem stromabseitigen Ende der ersten Leitung (118) in Verbindung stehendes stromaufseitiges Ende (120a) und ein zu einem Einlaß (110) des Luftfilters (109) mündendes stromabseitiges Ende (120b) aufweist, wobei die erste Leitung (118) aus Gummi bzw. Kautschuk hergestellt ist.

2. Luftansaugsystem nach Anspruch 1, bei dem die zweite Leitung (120) aus einem Kunstharz hergestellt ist.

3. Luftansaugsystem nach Anspruch 1, bei dem die Lufteinlaßöffnung (117) mit einem Vorderhälftenabschnitt (115) in Form eines inneren konkaven Teils und mit einem in Auswärtsrichtung aufgeweiteten hinteren Hälftenabschnitt (116) versehen ist.

## Revendications

1. Système d'admission d'air pour moteur de motocyclette du type muni d'un capot qui recouvre la partie avant d'un châssis de motocyclette, le capot (113) étant muni d'un orifice d'entrée d'air (117) pour capter le vent produit par le déplacement de la motocyclette, et d'un premier conduit (118) fixé à une surface intérieure dudit capot (113) derrière ledit orifice d'entrée d'air (117), caractérisé en ce qu'un filtre à air (109) est situé à l'arrière du moteur, en ce qu'un second conduit (120) est fixé à un élément du châssis (103), ledit second conduit (120) ayant une extrémité amont (120a) communiquant avec l'extrémité aval dudit premier conduit (118) et une extrémité aval (120b) s'ouvrant vers un orifice d'entrée (110) du filtre à air (109), ledit premier conduit (118) étant fait d'un caoutchouc.

2. Système d'admission d'air selon la revendication 1, dans lequel ledit second conduit (120) est fait d'une résine synthétique.

3. Système d'admission d'air selon la revendication 1, dans lequel ledit orifice d'entrée d'air (117) comporte une moitié avant (115) ayant une forme intérieure concave et une moitié arrière (116) s'évasant vers l'extérieur.
